Europäisches Patentamt

European Patent Office

Office européen des brevets

(11) Veröffentlichungsnummer: **0 496 958 A1**

## EUROPÄISCHE PATENTANMELDUNG

(21) Anmeldenummer: **91119136.9**

(22) Anmeldetag: **11.11.91**

(51) Int. Cl.⁵: **B60T 17/02**

(30) Priorität: **31.01.91 DE 4102842**

(43) Veröffentlichungstag der Anmeldung:
**05.08.92 Patentblatt 92/32**

(84) Benannte Vertragsstaaten:
**DE GB NL SE**

(71) Anmelder: **ROBERT BOSCH GMBH**
**Postfach 30 02 20**
**W-7000 Stuttgart 30(DE)**

(72) Erfinder: **Holfelder, Juergen, Ing.**
**Liliencronstrasse 19**
**W-7000 Stuttgart 75(DE)**
Erfinder: **Muhr, Ulrich, Dipl.-Ing.**
**Mahdauweg 30**
**W-7901 Illerkirchberg(DE)**
Erfinder: **Woelfel, Otto**
**Heumadenstrasse 11**
**W-7101 Unterheinriet(DE)**

(54) **Druckluftbremsanlage für Fahrzeuge.**

(57) Es wird eine Druckluftbremsanlage vorgeschlagen, die einen Hochdruckteil (12) und einen Normaldruckteil (15) hat. Zur Schonung des Kompressors (1) wird im Normalbetrieb die gesamte Anlage (Hochdruckteil 12 und Normaldruckteil 15) mit demselben, niederen Druck versorgt. Nur in Sonderfällen wird der Hochdruckteil (12) mit höheren Druck beschickt. Der Hochdruck kann nur dann erreicht werden, wenn der niederere Druck bereits in der gesamten Anlage vorhanden ist.

Die Druckluftbremsanlage ist zur Anwendung bei Kraftfahrzeugen bestimmt.

## Stand der Technik

Die Erfindung geht aus von einer Druckluftbremsanlage nach der Gattung des Hauptanspruchs. Eine derartige Druckluftbremsanlage ist bekannt (DE-23 06 162 A1).

Bei einer solchen bekannten Druckluftbremsanlage arbeitet der Kompressor ständig gegen den hohen Druck des Hochdruckteils. Das bewirkt entweder einen hohen Verschleiß oder bedingt die Verwendung eines speziellen Hochdruck-Kompressors, der schwerer und teurer als ein Normaldruck-Kompressor ist.

## Vorteile der Erfindung

Demgegenüber hat die Druckluftbremsanlage nach der vorliegenden Erfindung den Vorteil, daß im normalen Betrieb die gesamte Anlage (Hochdruck- und Niederdruckteil) mit demselben niederen Druck versorgt wird. Nur in Sonderfällen wird ein Teil mit einem höheren Druck betrieben, ansonsten wird auch der Hochdruckteil mit dem normalen Druck gefahren. Dadurch kann der Kompressor auf den Betrieb mit dem niederen Druck ausgelegt werden. Der Hochdruck kann dann nur erreicht werden, wenn der niederere Druck in der gesamten Anlage bereits ansteht und eine entsprechende Betätigung durch den Fahrer z.B. über einen Schalter oder aber über einen anderen Geber erfolgt.

## Zeichnung

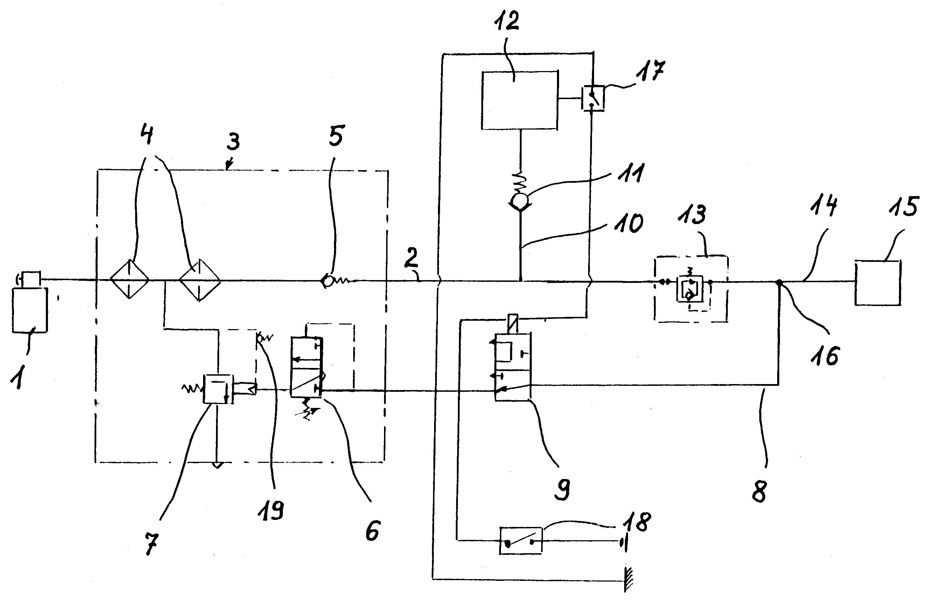

Ein Ausführungsbeispiel der Erfindung ist in der Zeichnung dargestellt und in der nachfolgenden Beschreibung näher erläutert.

## Beschreibung des Ausführungsbeispieles

Eine Druckluftbremsanlage hat einen Kompressor 1, an den eine Druckleitung 2 und Druckregler 3 angeschlossen sind. Der Druckregler 3 ist mit zwei Filtern 4, einem in der Leitung 2 liegenden Rückschlagventil 5, sowie einem Abschaltventil 6 und einem Leerlaufventil 7 ausgerüstet. Beide Ventile 6 und 7 sind zwar herkömmlicher Bauart, aber entgegen einer üblichen Druckregler-Auslegung wird das Abschaltventil 6 nicht unmittelbar von dem Druck in der Druckleitung 2 sondern über eine besondere Rückleitung 8 beaufschlagt, die parallel zur Druckleitung 2 verläuft und in die ein 3/2-Wege-Magnetventil 9 eingesetzt ist, dessen Bedeutung später noch näher erläutert wird.

Hinter dem Druckregler 3 zweigt von der Druckleitung 2 eine Leitung 10 ab, die über ein Rückschlagventil 11 zu einem vorzugsweise mit einem Vorratsbehälter versehenen Hochdruckteil 12 führt. In Weiterverfolgung der Druckleitung 2 gelangt man zu einem Druckbegrenzungsventil 13 und von dort über eine Leitung 14 zu einem Normaldruckteil 15. Die Leitung 14 besitzt einen Anschluß 16 für die parallel zur Druckleitung 2 verlaufende Rückleitung 8.

Das Druckbegrenzungsventil 13 ist auf 10,2 bar und das Abschaltventil auf 10 bar eingestellt.

## Normalbetrieb

Druckluft kommt vom Kompressor 1, durchströmt den Druckregler 3 und befüllt über die Druckleitung 2 sowohl den Hochdruckteil 12 als auch den Normaldruckteil 15.

Der Druck im Normaldruckteil 15 gelangt über die Rückleitung 8 und das stromlos offene 3/2-Wege-Ventil 9 zum Abschaltventil 6 des Druckreglers 3 und das Abschaltventil 6 spricht an, wenn im Normaldruckteil 15 der Druck von 10 bar erreicht ist. Auf dieses Ansprechverhalten hat das auf einen Druck von 10,2 bar eingestellte Druckbegrenzungsventil 13 keinen Einfluß. Durch das Ansprechen des Abschaltventils 6 erhält das Leerlaufventil 7 Druck und der Druckregler 3 steht wieder auf Fördern.

Wenn der Hochdruckteil 12 vorher unter das Druckniveau des Normaldruckteils 15 gefallen war, zieht er Druckluft vom Normaldruckteil 15 ab. Auch darauf reagiert dann der Druckregler 3, indem er - wie vorher ausgeführt - auf Fördern schaltet.

Fällt dagegen der Druck im Normaldruckteil 15 ab, dann sperrt das Rückschlagventil 11 den Hochdruckteil 12 gegen den Normaldruckteil 16 ab, so daß im Hochdruckteil 12 der Druck erhalten bleibt.

## Betrieb mit höherem Druck im Hochdruckteil 12

Wenn nun ein höherer Druck als 10 bar im Hochdruckteil 12 benötigt wird, dann wird das 3/2-Wege-Magnetventil 9 z.B. über einen Schalter 18 bestromt. Nach seiner Umschaltung wird der druckreglerseitige Leitungsteil der Rückleitung 8 entlüftet. Das vorher eine Leerlaufverbindung offen haltende Leerlaufventil 7 sowie das Abschaltventil 6 schalten in ihre Ausgangslage zurück, so daß der Druckregler 3 wieder auf "Fördern" steht. Nun fördert der Kompressor 1 Druck in den Hochdruckteil 12, bis ein gestrichelt dargestelltes Sicherheitsventil 19 bei 14 bar öffnet, oder ein Schalter 18 zurückgeschaltet wird. Der Hochdruckteil wird also auf 14 bar Maximaldruck aufgefüllt.

Der Druckregler 3 bleibt in seiner Förderstellung, bis das 3/2-Wege-Magnetventil 9 nicht mehr bestromt wird. Das Abschalten des Magnetventils 9 kann auch erreicht werden durch einen Druckschalter 17 in der Leitung 10 zum Hochdruckteil 12 oder - beim Anschluß einer Luftfederungsanlage an die Drucklufterzeugung - durch einen Niveauschalter der Luftfederung.

Der Druck in dem Normaldruckteil 15 steigt bei dieser Förderphase nur geringfügig über den Abschaltdruck (10 bar) des Druckreglers 3, weil das Druckbegrenzungsventil 13 den Druck auf 10,2 bar begrenzt. Dadurch, daß der Druck für das Umschalten des Druckreglers 3 über die Leitung 8 an dem Anschluß 16 hinter dem Druckbegrenzungsventil 13 erfolgt, wird der aus Abschaltventil 6 und Leerlaufventil 7 bestehende Steuerteil 6/7 des Druckreglers 3 nicht mit dem hohen Druck von 14 bar belastet. Dies gilt auch für das 3/2-Wege-Magnetventil 9, das deshalb klein und leicht gebaut sein kann.

Wenn der Stromkreis für das 3/2-Wege-Magnetventil 9 abgeschaltet wird, gelangt wieder der Druck aus der Durckleitung 2 über die Rückleitung 8 zum Druckregler-Abschaltventil, worauf der Druckregler 3 in seine Leerlaufphase schaltet. Wird im Normaldruckteil 15 Druckluft verbraucht, dann sichert das Rückschlagventil 11 den Hochdruckteil 12 gegen Luftverlust ab. Dabei wird der Normaldruckteil 15 wieder in üblicher Weise versorgt.

Der Hochdruckteil 12 erhält erst dann wieder Druckluft, wenn sein Druck unter das Druckniveau des Normaldruckteils 16 fällt oder wenn das 3/2-Wege-Nagnetventil 8 wieder bestromt wird.

druckteil (15) herrschenden, niedrigeren Druck (10 bar) ausgesetzt sind.

**Patentansprüche**

1. Druckluftbremsanlage für Fahrzeuge mit einem Kompressor, einem Druckregler sowie mit einem Hochdruckteil und einem Niederdruckteil, wobei vor dem Hochdruckteil ein Rückschlagentil und zwischen dem Hochdruck- und dem Niederdruckteil ein Druckbegrenzungsventil angeordnet ist, dadurch gekennzeichnet, daß parallel zum Druckbegrenzungsventil (13) ein 3/2-Wege-Magnetventil (9) vorgesehen ist, das in seiner stromlos offenen Stellung eine Verbindung vom- Niederdruckteil (15) zum Abschaltventil (6) des Druckreglers (3) herstellt.

2. Druckluftbremsanlage nach Anspruch 1, dadurch gekennzeichnet, daß am Hochdruckteil (12) ein Druckschalter (17) vorgesehen ist, der mit dem Magneten des 3/2-Wege-Magnetventiles (9) in einem Stromkreis liegt und der diesen Stromkreis unterbricht, wenn der Hochdruckteil (12) seinen gewünschten Maximaldruck (14 bar) erreicht hat.

3. Druckluftbremsanlage nach Anspruch 1 oder 2, dadurch gekennzeichnet, daß ein aus Abschaltventil (6) und Leerlaufventil (7) bestehender Druckregler-Steuerteil (6/7) und das 3/2-Wege-Magnetventil (9) jeweils nur dem im Normal-

Europäisches Patentamt

# EUROPÄISCHER RECHERCHENBERICHT

Nummer der Anmeldung

EP 91 11 9136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 511 960 (BOSCH) <br> * Seite 2, Zeile 7 – Seite 4, Zeile 8; Abbildung 1 * <br><br> --- | 1 | B60T17/02 |
| A | EP-A-0 165 376 (WABCO) <br> * Seite 4, Zeile 7 – Seite 5, Zeile 23; Abbildung 1 * <br><br> --- | 1 | |
| A | DE-B-1 017 203 (MOTOREN-WERKE MANNHEIM) <br><br> ----- | | |

**RECHERCHIERTE SACHGEBIETE (Int. Cl.5)**

B60T

Der vorliegende Recherchenbericht wurde für alle Patentansprüche erstellt

| Recherchenort | Abschlußdatum der Recherche | Prüfer |
|---|---|---|
| BERLIN | 07 MAI 1992 | BLURTON M.D. |